# EUROPÄISCHE PATENTSCHRIFT

(11) **EP 1 086 625 B1**
(45) Veröffentlichungstag und Bekanntmachung des Hinweises auf die Patenterteilung: **23.02.2005**
(21) Anmeldenummer: 00120497.3
(22) Anmeldetag: 20.09.2000
(51) Int. Cl.: A23C 9/154, A23C 13/14

(54) **Verfahren zur Herstellung eines Gelatine und Rahm enthaltenden Milchproduktes**
Process for the preparation of a milk product containing gelatine and cream
Procédé de préparation d'un produit laitier contenant de la gélatine et de la crème

(30) Priorität: 21.09.1999 AT 160799
(43) Veröffentlichungstag der Anmeldung: 28.03.2001
(73) Patentinhaber: HAMA Foodservice GesmbH, 5322 Hof bei Salzburg (AT)
(72) Erfinder: Haindl, Rudolf, 5020 Salzburg (AT); Mandl, Hans, 6542 Pfunds Nr. 87a (AT)
(74) Vertreter: Torggler, Paul Norbert, Dr.

(56) Entgegenhaltungen:
- EP-A- 0 897 670
- WO-A-96/21361
- DE-A- 2 348 023
- DE-A- 2 600 028
- DE-A- 19 528 936
- DE-A- 19 860 437

## Beschreibung

Die Erfindung betrifft ein Verfahren zur Herstellung eines Gelatine und Rahm enthaltenden Milchproduktes, wobei die Ingredienzen vermischt, erhitzt und in die Verpackung abgefüllt werden. Weiters betrifft die Erfindung ein insbesondere nach diesem Verfahren hergestelltes Milchprodukt.

Die DE 2600028 beschreibt die Herstellung eines Milchproduktes, wobei Gelatine in Magermilch und/oder Rahm quellen gelassen und mit weiteren Zutaten gemischt wird. Das Produkt ist über einen weiten Temperaturbereich beständig.

In der EP 0805629B1 ist ein derartiges Milchprodukt beschrieben. Es hat sich jedoch gezeigt, daß die bisher bekannten Verfahren die Entfaltung der Gelatine, die einen wesentlichen Einfluß auf den Geschmack, die Konsistenz und Entmischung des Endproduktes hat, nicht im gewünschten Ausmaß unterstützen.

Eine Aufgabe der Erfindung ist es, ein Verfahren zur Herstellung eines gelatinehältigen Milchproduktes anzugeben, das eine möglichst volle Entfaltung der Gelatine zuläßt.

Dies wird beim erfindungsgemäßen Verfahren dadurch erreicht, daß Magermilch mit der Gelatine in einem Mischtank vermischt wird, diese Mischung anschließend quellen gelassen und in weiterer Folge mit den restlichen Ingredienzen vermischt wird.

Die Verwendung von granulatförmiger Gelatine mit einer Körnung von vorzugsweise etwa 50 mesh und einer Gallertfestigkeit zwischen 200 und 250 Bloomgram sowie von Magermilch deren Fettanteil zwischen 0,1 % und 0,01 %, vorzugsweise bei etwa 0,02 % liegt zur Herstellung dieser Mischung, hat sich als besonders günstig für die Benetzung der Gelatine mit der Magermilch und somit für die Entfaltungsmöglichkeiten der Gelatine herausgestellt. Alle Prozentangaben sind dabei Gewichtsprozente.

Um eine innige Vermischung mit der Gelatine zu erzielen, wird die Magermilch in einem Mischtank auf eine zwischen 25°C und 40°C liegende Temperatur erwärmt und in weiterer Folge die Gelatine unter starkem Rühren eingerührt. Danach ist es günstig , wenn man die Mischung unter leichtem Rühren etwa eine halbe Stunde quellen läßt und vor dem Vermischen mit dem restlichen Ingredienzen etwa eine Minute auf eine Temperatur zwischen 55°C und 65°C, vorzugsweise auf 60°C erwärmt, bevor die Vermischung mit dem Rahm, dessen Fettgehalt bei etwa 16% liegt, erfolgt.

Durch die entsprechende Auswahl und Kombination der Rohstoffe für die Gelatine und bei genauer Einhaltung bestimmter Temperatur- und Zeitparameter bildet sich eine Einweißstruktur, die die Fähigkeit besitzt, ihre ausgebildete Struktur nicht mehr zu verändern. Anders ausgedrückt, das derart hergestellte Milchprodukt kann mehrmals erwärmt und abgekühlt werden, ohne zu zerfallen. Dieser Effekt konnte nach dem Stand der Technik nur unter Zugabe von Zusatzstoffen erzielt werden. Die Verwendung derartiger Zusatzstoffe entfällt beim erfindungsgemäßen Verfahren, bei dem die Gelatine nicht nur als Stabilisator für die Viskosität, sondern auch als Stabilisator für die Standfestigkeit des Milchproduktes dient.

Für eine lange ungekühlte Haltbarkeit des Endproduktes ist es besonders vorteilhaft, die zumindest Rahm und mit Magermilch angereicherte Gelatine enthaltende Mischung, deren ph-Wert zwischen 4 und 6,6 liegt, vor dem Abfüllen in die Verpackung kurzfristig auf eine über 120°C liegende Temperatur zu erhitzen.

Um eine genügende Festigkeit des Endproduktes bei Zimmertemperatur zu erreichen, ist bevorzugt vorgesehen, die zumindest Rahm und mit Magermilch angereicherte Gelatine enthaltende Mischung bis zum Erhitzen auf einem Wert zwischen 20°C und 40°C zu halten.

Bevorzugt ist vorgesehen, die zumindest Rahm und mit Magermilch angereicherte Gelatine enthaltende Mischung bei einer unter 100°C liegenden Temperatur mit hohem Druck vorzugsweise einstufig zu homogenisieren, um eine gleichmäßige Größe bzw. Verteilung der Fetteilchen zu erhalten.

Um eine Entmischung oder ein Ausflocken der Gelatine zu vermeiden, hat es sich als besonders günstig herausgestellt, wenn die Abfülltemperatur der Mischung zwischen 20°C und 30°C liegt.

Gemäß einem weiteren Aspekt der Erfindung soll ein insbesondere nach diesem Verfahren hergestelltes Milchprodukt angegeben werden.

Ein derartiges Milchprodukt ist dadurch gekennzeichnet, daß es mit Magermilch angereicherte Gelatine gemischt mit Rahm enthält.

Als besonders günstig für die Konsistenz und Haltbarkeit des neuartigen Milchproduktes hat sich herausgestellt, wenn mindestens 70% Rahm verwendet wird und der Gelatineanteil zwischen 1% und 3%, vorzugsweise bei 1,50% liegt.

Damit das neuartige Milchprodukt einen bevorzugten Fettgehalt von etwa 15% aufweist, ist gemäß einer weiteren Ausführungsform vorgesehen, der zumindest Rahm und mit Magermilch angereicherte Gelatine enthaltenden Mischung Hochfettrahm beizumischen.

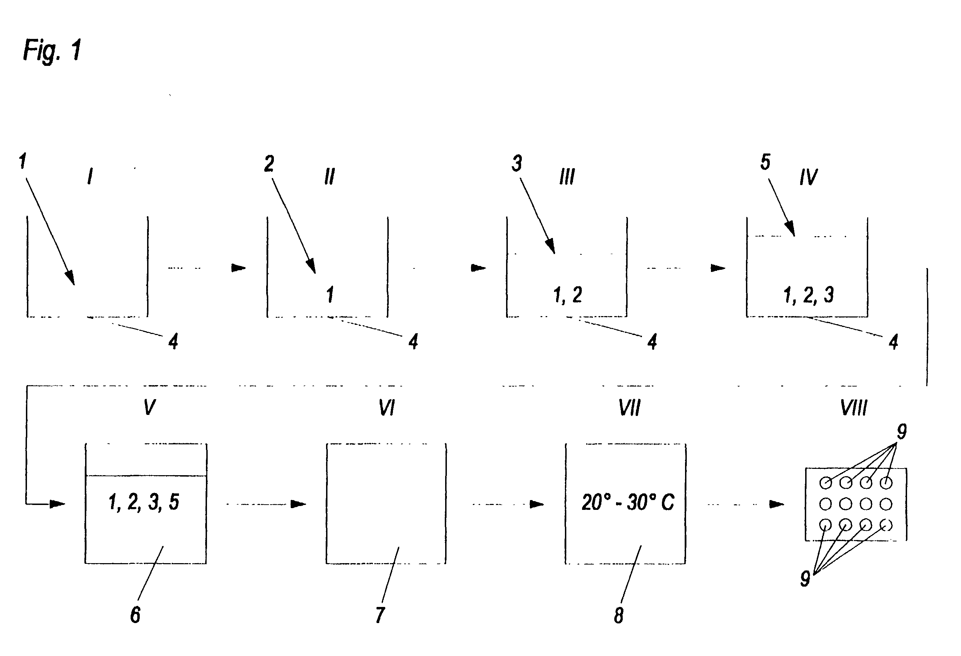

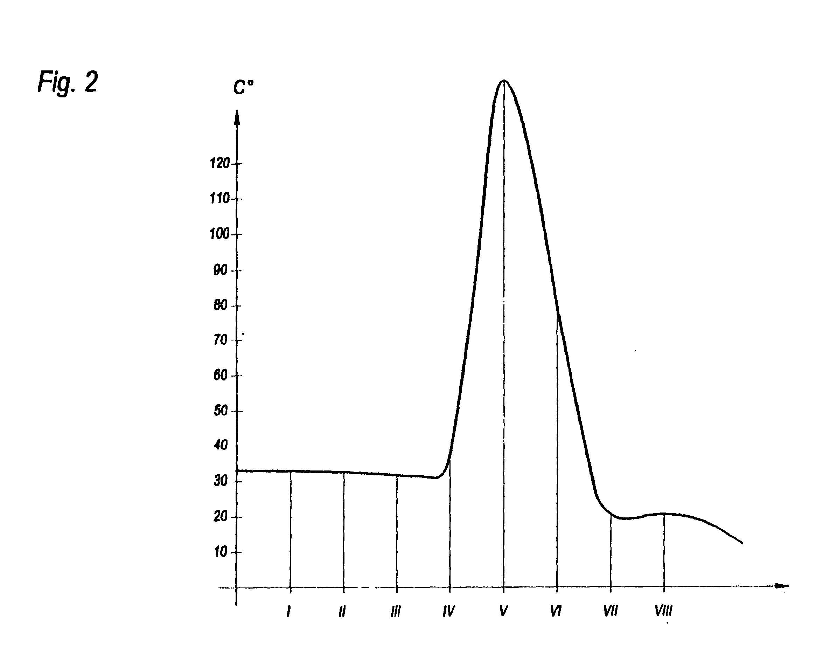

Nachstehend wird die Erfindung anhand eines bevorzugten Ausführungsbeispieles unter Bezugnahme auf die Zeichnung näher beschrieben. Es zeigen Fig. 1 eine schematische Darstellung eines erfindungsgemäßen Verfahrensablaufs und Fig. 2 den ungefähren Temperaturverlauf während der einzelnen Verfahrensschritte.

Im Schritt I wird Magermilch 1 in einem Mischtank 4 auf eine zwischen 25°C und 40°C liegende Temperatur erwärmt. In diese erwärmte Magermilch 1 kann dann mit einem Turbomischer, beispielsweise vom Typ Ytron, eine Speisegelatine 2 in Granulatform eingerührt werden.

Es hat sich herausgestellt, daß die Auswahl der Gelatine die Standfestigkeit des Endproduktes beeinflußt. Es kommt also der richtigen Auswahl und Kombination der Rohstoffe für die Gelatine große Bedeutung zu, wobei Versuche gezeigt haben, daß sich sowohl tierische als auch pflanzliche Gelatine zur Verwendung im erfindungsgemäßen Verfahren eignet. Beim gegenständlichen Ausführungsbeispiel ist die Gelatine aus fünf verschiedenen Sorten mittel- und/oder hochbloomigen Rindspalt hergestellt und weist eine Gallertfestigkeit von etwa 220 Bloomgram auf. Die Viskosität dieser Gelatine liegt bei etwa 41 millibar, wobei sich die Viskosität direkt proportional zu den Bloomgramen verhält. Die Viskosität der Gelatine wird bei diesem Ausführungsbeispiel derart festgestellt, daß man eine Mischung mit 6 2/3 % Gelatineanteil anrührt, diese Mischung im Wasserbad auf 60°C erhitzt, eine Probe zieht und von dieser Probe die Viskosität bestimmt.

Nach dem Einrühren der Gelatine in die Magermilch läßt man die Mischung mindestens 15 Minuten, vorteilhafterweise etwa eine halbe Stunde quellen. Nach diesem Quellvorgang wird die Mischung etwa 1 Minute auf ca. 60°C erhitzt, um die Vermischung der Gelatine mit der Magermilch zu unterstützen.

Im Schritt III wird Rahm 3 mit beispielsweise 15 % Fett beigemischt wird. In weiterer Folge wird bei diesem bevorzugten Ausführungsbeispiel dieser zumindest Rahm und mit Magermilch angereicherte Gelatine enthaltenden Mischung, die einen Fettgehalt von etwa 13% - 14% aufweist, Hochfettrahm 5 im Schritt IV beigemischt, um ein Endprodukt mit einem Fettgehalt von etwa 15 % zu erhalten.

Vor der Abfüllung in die Verpackung erfolgt zur Erzielung einer großen Haltbarkeit eine kurzfristige Erhitzung über mindestens 120°C, vorzugsweise über 130 °C, in einer UHT-Anlage 6 (Schritt V). Eine geeignete derartige Ultrahocherhitzungsanlage ist beispielsweise die Finnah/ST2 - Anlage.

Darauf wird die zumindest Rahm und mit Magermilch angereicherte Gelatine enthaltende Mischung in einem Homogenisator 7 bei beispielsweise 80°C und einem Druck zwischen 185 und 215 bar homogenisiert (Schritt VI). Nach einer Abkühlung auf eine zwischen 20°C und 30°C liegende Temperatur in der Abfüllmaschine 8 (Schritt VII) kann eine aseptische Abfüllung in beispielsweise - wie an sich bekannt - aus Karton und/oder Papier bestehende mit Aluminium und /oder Kunststoff (vorzugsweise Polyethylen) ausgekleidete Verpackungseinheiten 9 erfolgen, worauf im Kühlhaus ein rasches Abkühlen auf mindestens 15°C erfolgt (Schritt VIII).

## Patentansprüche

1. Verfahren zur Herstellung eines Gelatine, Magermilch und Rahm enthaltenden Milchproduktes, bei dem die Ingredienzen vermischt, erhitzt und in eine Verpackung abgefüllt werden, **gekennzeichnet durch** folgende Schritte:
a) Erhitzen der Magermilch auf eine zwischen 25° C und 40° C liegende Temperatur;
b) Einrühren der Gelatine in die erwärmte Magermilch unter starkem Rühren;
c) Quellen lassen der erwärmten Magermilch und Gelatine enthaltenden Mischung unter leichtem Rühren zwischen 15 und 40 Minuten, vorzugsweise zwischen 25 und 30 Minuten;
d) Beimischen von Rahm zur Magermilch und Gelatine enthaltenden Mischung.

2. Verfahren nach Anspruch 1, **dadurch gekennzeichnet, daß** die Mischung nach dem Quellen und vor dem Vermischen mit den restlichen Ingredienzen etwa eine Minute auf eine Temperatur zwischen 55 °C und 65 °C, vorzugsweise auf 60 °C erwärmt wird.

3. Verfahren nach Anspruch 1 oder 2, **dadurch gekennzeichnet, daß** der Fettanteil der Magermilch unter 0,3 %, vorzugsweise unter 0,1 % liegt.

4. Verfahren nach Anspruch 3, **dadurch gekennzeichnet, daß** der Fettanteil der Magermilch zwischen 0,1 % und 0,01 %, vorzugsweise bei 0,02 % liegt.

5. Verfahren nach einem der Ansprüche 1 bis 4, **dadurch gekennzeichnet, daß** die vorzugsweise granulatförmige Gelatine eine Körnung zwischen 35 und 65 mesh, vorzugsweise 50 mesh, und/oder eine Gallertfestigkeit zwischen 200 und 250 Bloomgram, vorzugsweise 220 Bloomgram aufweist.

6. Verfahren nach Anspruch 5, **dadurch gekennzeichnet, daß** die Gelatine aus fünf verschiedenen Sorten mittel- und/oder hochbloomigen Rinderspaltes hergestellt ist.

7. Verfahren nach Anspruch 5 oder 6, **dadurch gekennzeichnet, daß** die Gelatine eine Viskosität zwischen 34 und 46 millibar, vorzugsweise 41 millibar aufweist.

8. Verfahren nach einem der Ansprüche 1 bis 7, **dadurch gekennzeichnet, daß** der Fettanteil des verwendeten Rahms bei etwa 16 % liegt.

9. Verfahren nach einem der Ansprüche 1 bis 8, **dadurch gekennzeichnet, daß** der zumindest Rahm und mit Magermilch angereicherte Gelatine enthaltenden Mischung Hochfettrahm beigemischt wird.

10. Verfahren nach einem der Ansprüche 1 bis 9, **dadurch gekennzeichnet, daß** der ph-Wert der Mischung aller Ingredienzien zwischen 4 und 7 vorzugsweise zwischen 6,4 und 6,6 liegt.

11. Verfahren nach einem der Ansprüche 1 bis 10, **dadurch gekennzeichnet, daß** die zumindest Rahm und mit Magermilch angereicherte Gelatine enthaltende Mischung vor dem Abfüllen in die Verpackung kurzfristig auf eine über 120 °C liegende Temperatur erhitzt und homogenisiert wird.

12. Verfahren nach Anspruch 11, **dadurch gekennzeichnet, daß** die Temperatur der zumindest Rahm und mit Magermilch angereicherte Gelatine enthaltenden Mischung bis zum Erhitzen auf einem Wert zwischen 20 °C und 40 °C gehalten wird

13. Verfahren nach einem der Ansprüche 1 bis 12, **dadurch gekennzeichnet, daß** die Homogenisation bei einer Temperatur unter 100 °C und einem Druck zwischen 185 bar und 215 bar vorzugsweise einstufig erfolgt.

14. Verfahren nach einem der Ansprüche 1 bis 13, **dadurch gekennzeichnet, daß** die Abfülltemperatur der zumindest Rahm und mit Magermilch angereicherte Gelatine enthaltenden Mischung zwischen 20°C und 30°C liegt.

15. Milchprodukt, erhältlich durch ein Verfahren nach einem der Ansprüche 1 bis 14, das mit Magermilch angereicherte Gelatine vermischt mit Rahm enthält, **dadurch gekennzeichnet, dass** es mehrmals erwärmt und abgekühlt werden kann, ohne zu zerfallen, wobei als Stabilisator ausschließlich die mit Magermilch angereicherte Gelatine dient.

16. Milchprodukt nach Anspruch 15, **dadurch gekennzeichnet, daß** es mindestens 70 % vorzugsweise 90 % Rahm enthält.

17. Milchprodukt nach Anspruch 15 oder 16, **dadurch gekennzeichnet, daß** der Anteil an Gelatine zwischen 1 % und 3 %, vorzugsweise etwa bei 1,50 %, liegt.

18. Milchprodukt nach einem der Ansprüche 15 bis 17, **dadurch gekennzeichnet, daß** es einen Fettgehalt von etwa 15 % aufweist.

## Claims

1. A process for the production of a dairy product containing gelatine, skimmed milk and cream, wherein the ingredients are mixed, heated and put into a pack, **characterized by** the following steps:
a. heating the skimmed milk to a temperature of between 25°C and 40°C;
b. stirring in the gelatine into the warmed skimmed milk with vigorous agitation;
c. soaking the mixture containing skimmed milk and gelatine with slight agitation for between 15 and 40 minutes, preferably for between 25 and 30 minutes;
d. mixing of cream into the mixture containing skimmed milk and gelatine.

2. A process as set forth in claim 1, **characterized in that** after soaking and prior to mixing with the remaining ingredients the mixture is heated for approximately one minute to a temperature of between 55°C and 65°C, preferably to 60°C.

3. A process as set forth in claim 1 or claim 2, **characterized in that** the fat proportion of the skimmed milk is below 0.3%, preferably below 0.1 %.

4. A process as set forth in claim 3, **characterized in that** the fat proportion of the skimmed milk is between 0.1% and 0.01%, preferably being 0.02%.

5. A process as set forth in one of claims 1 through 4, **characterized in that** the gelatine which is preferably in granule form is of a grain size of between 35 and 65 mesh, preferably 50 mesh, and/or has a gelatine rigidity of between 200 and 250 Bloom grams, preferably 220 Bloom grams.

6. A process as set forth in claim 5, **characterized in that** the gelatine is produced from five different kinds of medium and/or high-Bloom split cowhide.

7. A process as set forth in claim 5 or claim 6, **characterized in that** the gelatine is of a viscosity of between 34 and 46 millibars, preferably being 41 millibars.

8. A process as set forth in one of claims 1 through 7, **characterized in that** the fat proportion of the cream used is about 16%.

9. A process as set forth in one of claims 1 through 8, **characterized in that** high-fat cream is added to the mixture containing at least cream and gelatine enriched with skimmed milk.

10. A process as set forth in one of claims 1 through 9, **characterized in that** the pH-value of the mixture of all ingredients is between 4 and 7, preferably between 6.4 and 6.6.

11. A process as set forth in one of claims 1 through 10, **characterized in that** before being put into a pack the mixture containing at least cream and gelatine enriched with skimmed milk is heated briefly to a temperature above 120°C and is homogenized.

12. A process as set forth in claim 11, **characterized in that** the temperature of the mixture containing at least cream and gelatine enriched with skimmed milk is maintained up to the heating operation at a value of between 20°C and 40°.

13. A process as set forth in one of claims 1 through 12, **characterized in that** the homogenization operation is effected preferably in one stage at a temperature below 100°C and a pressure between 185 bars and 215 bars.

14. A process as set forth in one of claims 1 through 13, **characterized in that** the temperature at which the mixture containing at least cream and gelatine enriched with skimmed milk is put into a pack is between 20°C and 30°C.

15. A dairy product obtainable by a process as set forth in one of claims 1 through 14 containing gelatine enriched with skimmed milk mixed with cream, **characterized in that** it can be heated and cooled down several times without braking down, wherein the gelatine enriched with skimmed milk serves as the only stabilizer.

16. A dairy product as set forth in claim 15, **characterized in that** it contains at least 70%, preferably 90% cream.

17. A dairy product as set forth in claim 15 or claim 16, **characterized in that** the proportion of gelatine is between 1% and 3%, preferably at about 1.50%.

18. A dairy product as set forth in one of claims 15 through 17, **characterized in that** it has a fat content of about 15%.

## Revendications

1. Procédé de fabrication d'un produit laitier contenant de la gélatine, du lait écrémé et de la crème, dans lequel les ingrédients sont mélangés, chauffés et conditionnés dans un emballage, **caractérisé par** les étapes suivantes :
a) chauffer du lait écrémé à une température située entre 25° C et 40° C ;
b) incorporer de la gélatine dans le lait écrémé chauffé en remuant vigoureusement ;
c) laisser gonfler le mélange contenant le lait écrémé chauffé et de la gélatine en agitant légèrement pendant une durée de 15 à 40 minutes, de préférence de 25 à 30 minutes ;
d) ajouter de la crème au mélange contenant le lait écrémé et la gélatine.

2. Procédé selon la revendication 1, **caractérisé en ce que** le mélange est chauffé environ une minute après le gonflement et avant le mélange avec les ingrédients restants, à une température entre 55° C et 65° C, de préférence à 60° C.

3. Procédé selon la revendication 1 ou 2, **caractérisé en ce que** la proportion de matières grasses du lait écrémé se situe en dessous de 0,3 %, de préférence en dessous de 0,1 %.

4. Procédé selon la revendication 3, **caractérisé en ce que** la proportion de matières grasses du lait écrémé se situe entre 0,1 % et 0,01 %, de préférence à 0,02 %.

5. Procédé selon l'une quelconque des revendications 1 à 4, **caractérisé en ce que** la gélatine, de préférence sous forme de granulé, présente une granulométrie entre 35 et 65 mesh, de préférence de 50 mesh, et/ou un degré de gélification entre 200 et 250 bloom, de préférence de 220 bloom.

6. Procédé selon la revendication 5, **caractérisé en ce que** la gélatine est fabriquée à partir de cinq sortes différentes de peaux de bovin à efflorescence moyenne et/ou élevée.

7. Procédé selon la revendication 5 ou 6, **caractérisé en ce que** la gélatine présente une viscosité entre 34 et 46 millibars, de préférence 41 millibars.

8. Procédé selon l'une quelconque des revendications 1 à 7, **caractérisé en ce que** la teneur en matières grasses de la crème utilisée est de 16 % environ.

9. Procédé selon l'une quelconque des revendications 1 à 8, **caractérisé en ce que** l'on ajoute au mélange contenant au moins la crème et la gélatine enrichie avec le lait écrémé, de la crème à teneur élevée en matières grasses.

10. Procédé selon l'une quelconque des revendications 1 à 9, **caractérisé en ce que** le pH du mélange de tous les ingrédients se situe entre 4 et 7, de préférence entre 6,4 et 6,6.

11. Procédé selon l'une quelconque des revendications 1 à 10, **caractérisé en ce que** le mélange contenant au moins la crème et la gélatine enrichie avec le lait écrémé est chauffé brièvement à une température supérieure à 120° C et homogénéisé avant le conditionnement dans l'emballage.

12. Procédé selon la revendication 11, **caractérisé en ce que** la température du mélange contenant au moins la crème et la gélatine enrichie avec le lait écrémé est maintenue à une valeur entre 20° C et 40° C jusqu'au chauffage.

13. Procédé selon l'une quelconque des revendications 1 à 12, **caractérisé en ce que** l'homogénéisation s'effectue de préférence en une étape à une température inférieure à 100° C et à une pression entre 185 bars et 215 bars.

14. Procédé selon l'une quelconque des revendications 1 à 13, **caractérisé en ce que** la température de conditionnement du mélange contenant au moins la crème et la gélatine enrichie avec le lait écrémé se situe entre 20° C et 30° C.

15. Produit laitier obtenu par un procédé selon l'une quelconque des revendications 1 à 14, qui contient de la gélatine enrichie avec du lait écrémé, mélangée avec de la crème, **caractérisé en ce qu'**il peut être plusieurs fois chauffé et refroidi sans se désagréger, la gélatine enrichie avec le lait écrémé servant exclusivement de stabilisateur.

16. Produit laitier selon la revendication 15, **caractérisé en ce qu'**il contient au moins 70 %, de préférence 90 % de crème.

17. Produit laitier selon la revendication 15 ou 16, **caractérisé en ce que** la proportion en gélatine se situe de préférence entre 1 % et 3 %, de préférence, à environ 1,50 %.

18. Produit laitier selon l'une quelconque des revendications 15 à 17, **caractérisé en ce qu'**il présente une teneur en matières grasses d'environ 15 %.
